# EUROPEAN PATENT APPLICATION

(11) **EP 1 788 684 A1**
(43) Date of publication of application: **23.05.2007**
(21) Application number: 06380292.0
(22) Date of filing: 14.11.2006
(51) Int. Cl.: H02G 15/013, H02G 15/192

(54) **An insulation system for the ends of electric cables**

(30) Priority: 17.11.2005 ES 200502821
(71) Applicant: Ridelin, S.L., 08240 Manresa (Barcelona) (ES)
(72) Inventor: Capelles de la Fuente, Rosa, c/o RIDELIN, S.L., 08240 Manresa (Barcelona) (ES)
(74) Representative: Aragones Forner, Rafael Angel

(57) **Abstract**

An insulation system for the ends of electric cables.

The invention consists in an arrangement of elements being adapted to be innerly fitted to an end of a hollow, cylindrical support body for carrying out splicings, branchings or terminations, said arrangement comprising a frustoconical seal being fit to adapt to different cable cross-sections, a locking ring for locking the seal with respect to the support body, and an inlet piece for centring the cable and locking the seal at the entry of the cable into the support body.

## Description

### OBJECT OF THE INVENTION

The present invention has as its object an insulation system for the ends of electric cables.

### FIELD OF THE INVENTION

If the end of the electric cable is not properly insulated it can cause undesired electric discharges, such a contingency representing a serious danger for the citizens, the installations, the houses, etc.

The protection of the ends of cables has always been done in many different ways. In the past, cable ends used to be covered with corresponding insulating elements such as the so-called insulating tapes, and in some cases this is still being done nowadays. But in the case of the electric connections in many instances the cable ends are not properly insulated since they are not fully and sealingly enclosed as would be necessary for their proper protection.

### SUMMARY OF THE INVENTION

The aforementioned drawbacks have been now totally obviated by means of the insulation system for the ends of electric cables being the object of the present invention.

The insulation system of the present invention is essentially characterised in that it comprises an arrangement of elements being adapted to be innerly fitted to an end of a hollow, cylindrical support body when carrying out splicings, branchings or terminations, said arrangement comprising a frustoconical seal being fit to adapt to different cable cross-sections, a locking ring for locking the seal with respect to the support body, and an inlet piece for centring the cable and locking the seal at the entry of the cable into the support body.

According to the present invention the hollow, cylindrical support body is provided with an annular recess in the region being adjacent to the end, the larger annular base of the seal being adapted to be fitted against said annular recess, the ring being provided for locking said seal inside the support body being adapted to be fitted into said larger annular base of said seal, the centring inlet piece being provided with a neck being adapted to be innerly fitted into the aforementioned annular recess, and with a perimetric, disc-shaped flange being adapted to abuttingly engage the end of the support body while allowing said piece to be inserted.

The centring inlet piece has a configuration being made up as a by way of grid with a central orifice for the passage of the cable and with spaced radial slits allowing it to open as the cable is introduced into the support body, as well as to create the corresponding locking engagement.

The frustoconical seal has spaced radial slits allowing it to adapt to the cross-sections of the cables.

These and other features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In said drawings:
Fig. 1 is a longitudinal section of the insulation system of the present invention;
Fig. 2 is a longitudinal section like that of Fig. 1 with the end of the electric cable being fitted into the system of the invention;
Fig. 3 is an end view of the system of the invention illustrating the front end of the centring inlet piece;
Fig. 4 is a cross-sectional view at a different scale as per section line IV-IV in Fig. 2; and
Fig. 5 is a perspective view of the system.

### DETAILED DESCRIPTION OF A PREFERRED EMBODIMENT

According to the drawings the insulation system for the ends of electric cables as per the present invention comprises an arrangement of elements being adapted to be innerly fitted into a hollow, cylindrical support body -1- for carrying out splicings, branchings or terminations, said support body -1- being provided with an annular recess -1a- in the region being adjacent to its end.

Said arrangement comprises a seal -2- having a frustoconical configuration being fit to adapt to cables -C- of any diameter, said seal being adapted to fit into said annular recess -1a- of the support body -1- and to have its larger annular base -2a- abuttingly applied against the corresponding annular shoulder -1b-, a locking ring -3- for locking the seal -2- in the annular recess -1a- of the support body -1-, the ring -3- for such a purpose fitting into the aforementioned larger annular base -2a- of the seal -2- and thus keeping it in position against the aforementioned annular shoulder -1b-, and an inlet piece -4- of special design being provided for centring the cable -C- at its entry into the system of the invention and for locking said seal -2- at the entry of the cable -C- into the support body -1-.

The centring inlet piece -4- is provided with an inner neck -5- being adapted to innerly fit into the aforementioned annular recess -1a- and with a perimetric, disc-shaped flange -6- being fit to abuttingly engage the end of the support body -1- and limiting the penetration of said piece -4- into the support body -1-.

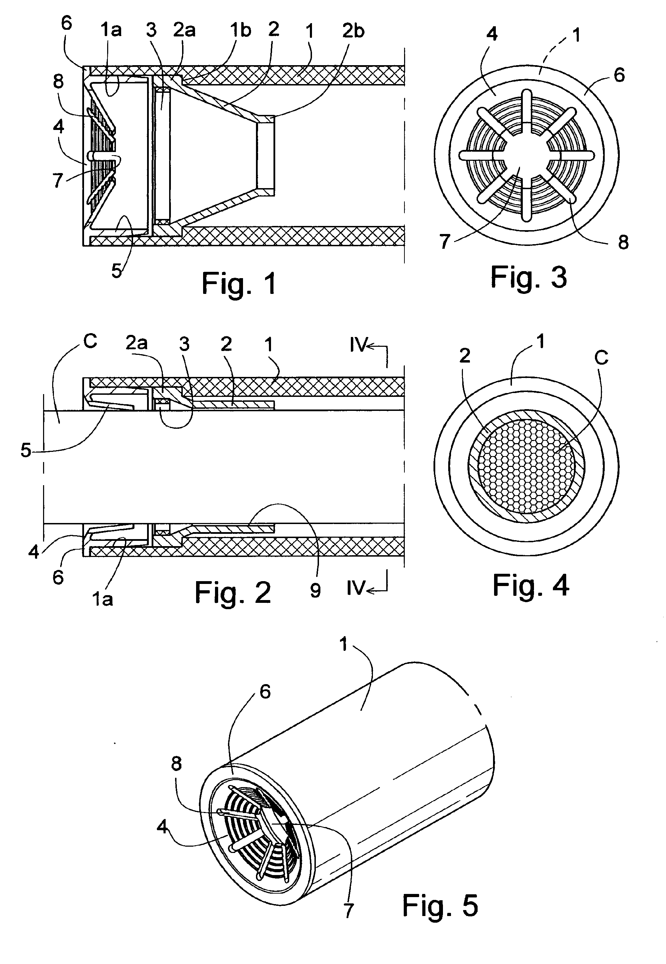

Figs. 1 and 2 are perfectly illustrative views showing the aforementioned fitting of the elements -2-, -3- and -4- of the arrangement to the support body -1- in relation to the electric cable -C- being accommodated in its inside.

As shown by Figs. 1, 2, 3 and 5, the centring inlet piece -4- has a configuration being made up as a by way of grid with a central orifice -7- for the passage of the cable -C- and with spaced radial slits -8- allowing it to open as the cable -C- penetrates (see Fig. 2), as well as to lockingly engage the cable.

Between its larger annular base -2a- and its smaller annular base -2b- the frustoconical seal -2- in its turn has spaced radial slits -9- (not shown) allowing it to adapt to the different cable cross-sections.

It is to be pointed out that the insulation system for the ends of electric cables being the object of the present invention is as has been said applicable for carrying out splicings, branchings or terminations as might be convenient, for covering and protecting the ends of electric cables of any cross-section, thereby providing a perfect enclosure and sealing.

The insulation system of the invention is as well applicable to any of the ends of the electric connectors being either known or of any new design.

The invention can within its essentiality be put into practice in other embodiments differing only in detail from the one having been described above only by way of example, said other embodiments also falling within the scope of the protection being sought. This insulation system for the ends of electric cables can hence be carried out with the best suited means and materials and with the most convenient accessories, and its integrating elements can be replaced with others being technically equivalent, all this falling within the spirit of the appended claims.

## Claims

1. An insulation system for the ends of electric cables, said insulation system being of a tubular type and being hence carried out by means tubes, sleeves, caps and the like being made of plastics material, **characterised in that** it comprises an arrangement of elements being adapted to be innerly fitted to an end of a hollow, cylindrical support body (1) when carrying out splicings, branchings or terminations, as the case might be, said arrangement comprising a frustoconical seal (2) being fit to adapt to different cable cross-sections, a locking ring (3) for locking the seal with respect to the support body (1), and an inlet piece (4) for centring the cable (C) and locking the seal (2) at the entry of the cable (C) into the support body (1).

2. An insulation system for the ends of electric cables as per claim 1, **characterised in that** the hollow, cylindrical support (1) body is provided with an annular recess (1a) in the region being adjacent to the end, the larger annular base (2a) of the seal (2) being adapted to be fitted against said annular recess, the ring (3) being provided for locking said seal (2) inside the support body (1) being adapted to be fitted into said larger annular base of said seal, and **in that** the centring inlet piece (4) is provided with a neck (5) being adapted to be innerly fitted into the aforementioned annular recess (1a), and with a perimetric, disc-shaped flange (6) being adapted to abuttingly engage the end of the support body (1) and limiting the penetration of said piece (4).

3. An insulation system for the ends of electric cables as per claims 1 and 2, **characterised in that** the centring inlet piece (4) has a configuration being made up as a by way of grid with a central orifice (7) for the passage of the cable (C) and with spaced radial slits (8) allowing it to open as the cable (C) is introduced into the support body (1), as well as to create the corresponding locking engagement.

4. An insulation system for the ends of electric cables as per claims 1 and 2, **characterised in that** the frustoconical seal (2) has spaced radial slits (9) allowing it to adapt to the cross-sections of the cables (C).
